# EUROPEAN PATENT APPLICATION

(11) **EP 2 221 744 A2**
(43) Date of publication of application: **25.08.2010**
(21) Application number: 10153253.9
(22) Date of filing: 11.02.2010
(51) Int. Cl.: G06K 7/10

(54) **Imaging reader for and method of processing a plurality of data and a target per single actuation**

(30) Priority: 24.02.2009 US 380143
(71) Applicant: Symbol Technologies, Inc., Holtsville, NY 11742-1300 (US)
(72) Inventor: Fjellstad, Christopher, Smithtown, NY 11787 (US); Mauro, Patrick, Lake Grove, NY 11755 (US); Sun, Yu, Stony Brook, NY 11790 (US)
(74) Representative: Kopf, Korbinian Paul

(57) **Abstract**

An imaging reader (30) for, and a method of, processing a plurality of data, such as one or more symbols having the same or different symbologies, a receipt acknowledgment, and an alphanumeric address arranged at spaced-apart locations on a target, such as a parcel delivery label, employ a solid-state imager (24) having an array of image sensors for capturing return light from the data on the target over a field of view, an actuator for actuating the imager to capture the return light from the data on the target (38) in a single actuation, and a controller (36) automatically configured for detecting all the data and the spaced-apart locations at which the data is arranged over the field of view, and for processing the return light captured by the imager from all the data only when all the data is of a predetermined type and is at predetermined locations on the target, in response to the single actuation.

## Description

### DESCRIPTION OF THE RELATED ART

Solid-state imaging systems or imaging readers have been used, in both handheld and hands-free modes of operation, to capture images from diverse types of data, such as bar code symbols to be electro-optically decoded and read and/or non-symbols to be processed for storage or display. Bar code symbols have different bar and space patterns that are used to represent different characters. Sets of these patterns are grouped together to form a symbology. There are many types of bar code symbologies, each having their own special characteristics and features. Most symbologies are designed to meet the needs of a specific application or industry. One omnipresent symbology is the Universal Product Code (UPC), which is comprised of a linear arrangement of bars and spaces (each termed as an element) of various widths that, when decoded, uniquely identify a product and its manufacturer. Other symbologies include, by way of non-limiting example, Code 128, Interleaved 2 of 5, Discrete 2 of 5, IATA 2 of 5 and MSI. Non-symbols can include any person, place or thing, especially an alphanumeric address and a signature or seal that signifies receipt and acceptance of a transaction, such as a parcel delivery. Both symbols and non-symbols can be found on a single target, such as a parcel delivery label.

The imaging reader includes a solid-state imager having an array of photocells or light sensors, which correspond to image elements or pixels in a field of view of the imager, an illuminating light assembly for illuminating the field of view with illumination light from an illumination light source, e.g., a laser or one or more light emitting diodes (LEDs), and an imaging lens assembly for capturing return ambient and/or illumination light scattered and/or reflected from the target data being imaged over a range of working distances. Such an imager may include a one- or two-dimensional charge coupled device (CCD) or a complementary metal oxide semiconductor (CMOS) device and associated circuits for producing electronic analog signals corresponding to a one- or two-dimensional array of pixel information over the field of view. The imager is analogous to the imagers used in electronic digital cameras.

When the target data is a symbol, signal processing circuitry including a digitizer is used for digitizing the analog signal, and a programmed microprocessor or controller is used for processing and decoding the digitized signal based upon a specific symbology used for the symbol. When the target data is a non-symbol, the signal processing circuitry will typically de-skew the captured image, re-sample the captured image to be of a certain size, enhance the quality of the captured image, and compress the captured image prior to transmission to a memory or a remote host.

It is therefore known to use the imager for capturing a monochrome image of the symbol as, for example, disclosed in U.S. Patent No. 5,703,349. It is also known to use the imager with multiple buried channels for capturing a full color image of the symbol as, for example, disclosed in U.S. Patent No. 4,613,895. It is common to provide a two-dimensional CCD with a 640 x 480 resolution commonly found in VGA monitors, although other resolution sizes are possible.

It is desirable in many applications, especially in the parcel delivery field, for the imaging reader to read multiple target data of different types, including one or more symbols of the same or different symbologies, one or more alphanumeric text addresses of an addressor or an addressee of a parcel, a handwritten signature or a stamped seal that signifies receipt and acceptance of delivery of the parcel, and a picture indicative of the delivery. All of this data are arranged at spaced-apart different locations on a target, such as a parcel delivery label.

An operator of an imaging reader of the prior art has to successively aim the reader at each piece of data in its turn and to manually pull a trigger to initiate reading of each piece of data. A new operator, when presented with a label having multiple data types, will be unsure of which data type to read first, and in what order and, hence, must be trained. Regardless of training, multiple trigger pulls are required to complete the reading of a single label bearing multiple data. This is time-consuming and error prone. It would be desirable to reduce the training and operational burden imposed on the operators of known imaging readers and to enhance the productivity of such imaging readers.

### SUMMARY OF THE INVENTION

One feature of the present invention resides, briefly stated, in an imaging reader for imaging a plurality of data of different types, including one or more symbols of the same or different symbologies, and/or one or more alphanumeric text addresses of an addressor or an addressee of a parcel, and/or a handwritten signature or a stamped seal that signifies receipt and acceptance of delivery of the parcel, and/or a picture indicative of the delivery. All of this data are arranged at spaced-apart different locations on a single target, such as a parcel delivery label.

The reader includes a solid-state imager having an array of image sensors for capturing return light from the plurality of data on the target over a field of view. Preferably, the imager is a CCD or a CMOS with a rolling or a global shutter. The array may be one-dimensional, i.e., linear arranged along a single row, or two-dimensional having mutually orthogonal multiple rows and columns. Preferably, an actuator, such as a manually depressable trigger, is provided on the reader for actuating the imager to capture the return light from the plurality of data on the target in a single actuation or trigger pull.

In accordance with this invention, a programmed microprocessor or controller is operatively connected to the actuator and the imager, and is automatically configured for detecting the plurality of data and the spaced-apart locations or areas at which the plurality of data is arranged over the field of view, and for processing the return light captured by the imager from the plurality of data only when the plurality of data is of a predetermined type and is at predetermined locations on the target, in response to the single actuation. The controller is configured for transmitting the processed return light captured by the imager from the plurality of data away from the controller only after all the data is detected to be of the predetermined type and located at the predetermined locations.

More particularly, when the plurality of data includes a symbol having a symbology, a receipt acknowledgment, and an alphanumeric address, the controller is configured for locating a symbol area, a receipt area, and an address area on the target, and for detecting whether the symbol is located in the symbol area and has a predetermined symbology, whether the receipt acknowledgment is located in the receipt area, and whether the address is located in the address area. Thereupon, the controller is configured for decoding the symbol if the symbol is located in the symbol area, for processing the receipt acknowledgment if the receipt acknowledgment is located in the receipt area, and for processing the address if the address is located in the address area.

In the preferred embodiment, the controller is configured for processing the return light captured by the imager from the plurality of data in a predetermined order, i.e., which data is processed first, second, and so on. The actuator is manually operated to capture the return light from the plurality of data on the target in a single manual action. Thus, an operator of the imaging reader of this invention does not successively aim the reader at each piece of data in its turn, nor manually pull a trigger to initiate reading of each piece of data. This minimizes errors and the time needed to read all the data. The operator need not be trained as to which data type to read first, and in what order. A single trigger pull initiates the reading of all the data on a single label in a so-called "single-point-and-shoot multiple data" mode of operation. The burden imposed on the operator is reduced and the productivity of the imaging reader is enhanced.

Another feature of the present invention resides in a method of processing a plurality of data arranged at spaced-apart locations on a target, and is performed by capturing return light from the plurality of data on the target over a field of view of an imager, actuating the imager to capture the return light from the plurality of data on the target in a single actuation, detecting the plurality of data and the spaced-apart locations at which the plurality of data is arranged over the field of view, and processing the return light captured by the imager from the plurality of data only when the plurality of data is of a predetermined type and is at predetermined locations on the target, in response to the single actuation.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

FIG. 1 is a perspective view of a portable imaging reader operative in either a handheld mode, or a hands-free mode, for capturing return light from target data;

FIG. 2 is a schematic diagram of various components of the reader of FIG. 1;

FIG. 3 is a view of a parcel delivery label depicting such target data as bar code symbols, a receipt acknowledgment, and alphanumeric text addresses to be captured by the reader of FIG. 1; and

FIG. 4 is a flow chart explaining operation of the reader of FIG. 1 in accordance with this invention.

### DETAILED DESCRIPTION OF THE PREFERRED EMBODIMENTS

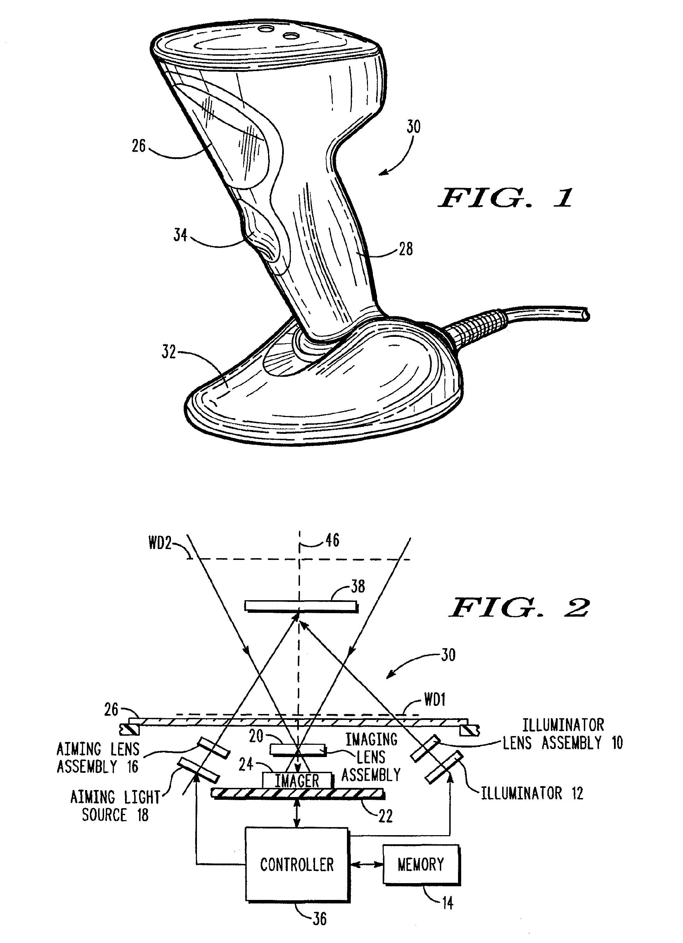

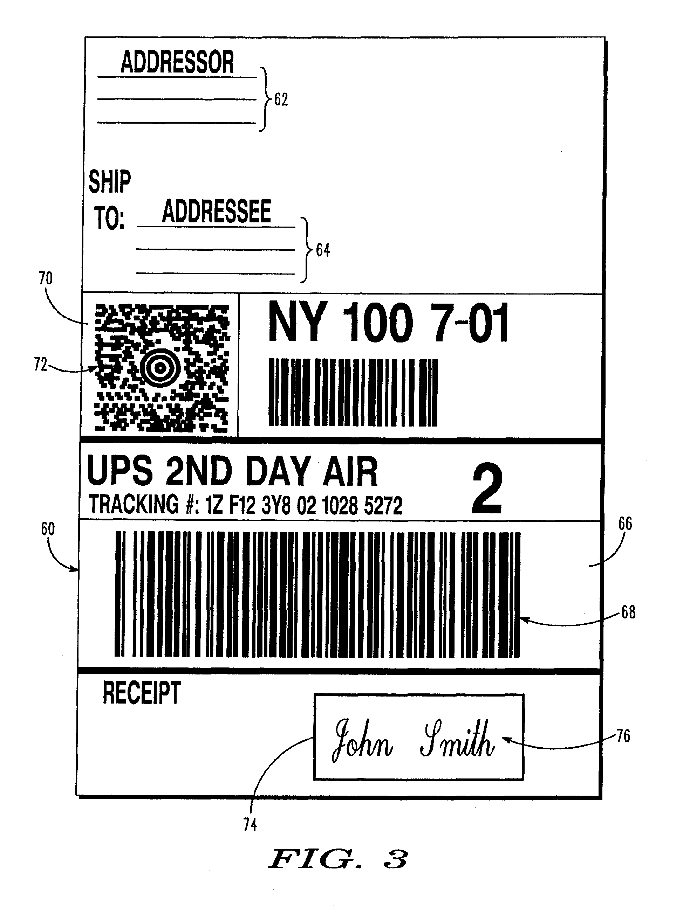

Reference numeral 30 in FIG. 1 generally identifies an imaging reader having a generally upright window 26 and a gun-shaped housing 28 supported by a base 32 for supporting the imaging reader 30 on a countertop. The imaging reader 30 can thus be used in a hands-free mode as a stationary workstation in which a target is slid, swiped past, or presented to, the window 26, or can be picked up off the countertop and held in an operator's hand and used in a handheld mode in which the reader is moved, and a trigger 34 is manually depressed to initiate imaging of target data, especially one or more symbols of the same or different symbologies, and/or one or more alphanumeric text addresses of an addressor or an addressee of a parcel, and/or a handwritten signature or a stamped seal that signifies receipt and acceptance of delivery of the parcel, and/or a picture indicative of the delivery, as described below and illustrated in FIG. 3, to be read at a distance from the window 26. In another variation, the base 32 can be omitted, and housings of other configurations can be employed. A cable, as illustrated in FIG. 1, connected to the base 32 can also be omitted, in which case, the reader 30 communicates with a remote host by a wireless link, and the reader is electrically powered by an on-board battery.

As schematically shown in FIG. 2, an imager 24 is mounted on a printed circuit board 22 in the reader. The imager 24 is a solid-state device, for example, a CCD or a CMOS imager having a one-dimensional array of addressable image sensors or pixels arranged in a single, linear row, or a two-dimensional array of such sensors arranged in mutually orthogonal rows and columns, and operative for detecting return light captured by an imaging lens assembly 20 along an optical path or axis 46 through the window 26. The return light is scattered and/or reflected from the data on a target 38 as pixel data over a two-dimensional field of view. The imaging lens assembly 20 is operative for adjustably focusing the return light onto the array of image sensors to enable the data on the target 38 to be imaged. The target 38 is located anywhere in a working range of distances between a close-in working distance (WD1) and a far-out working distance (WD2). In a preferred embodiment, WD1 is about four to six inches from the imager array 24, and WD2 can be over one foot away from the window 26.

An illuminating assembly is also mounted in the imaging reader and preferably includes an illuminator or illuminating light source 12, e.g., a light emitting diode (LED) or a laser, and an illuminating lens assembly 10 to uniformly illuminate the data on the target 38 with an illuminating light having an intensity level over an illumination time period. The light source 12 is preferably pulsed.

An aiming assembly is also mounted in the imaging reader and preferably includes an aiming light source 18, e.g., an LED or a laser, and an aiming lens assembly 16 for generating a visible aiming light pattern on the target 38. The aiming pattern is useful to help the operator accurately aim the reader at the target 38.

As shown in FIG. 2, the imager 24, the illuminating light source 12 and the aiming light source 18 are operatively connected to a controller or programmed microprocessor 36 operative for controlling the operation of these components. Preferably, the microprocessor 36 is operative for processing the return light from the data on the target 38, and for decoding the captured target image when the target data is a bar code symbol. A memory 14 is accessible by the controller 36 for storing and retrieving processed data.

In operation, the controller 36 sends a command signal to energize the aiming light source 18 prior to reading, and also pulses the illuminating light source 12 for the illumination time period, say 500 microseconds or less, and energizes and exposes the imager 24 to collect light, e.g., illumination light and/or ambient light, from the target 38 during an exposure time period. A typical array needs about 16-33 milliseconds to acquire the entire target image and operates at a frame rate of about 30-60 frames per second.

As shown in FIG. 3, one preferred embodiment of the target 38 is a parcel delivery label 60 that includes, among other things, an addressor area 62 in which addressor data in alphanumeric text of a parcel to be delivered is identified, an addressee area 64 in which addressee data in alphanumeric text of the parcel is identified, a symbol area 66 in which a datum or symbol 68 having a specific symbology, e.g., Code 128, and indicative of a tracking number for the parcel, is located, another symbol area 70 in which a different a datum or symbol 72 having a different symbology is located, and a receipt acknowledgment area 74 in which a datum or receipt acknowledgment 76 in pictoral form, such as a handwritten signature or a stamp/seal, is entered upon delivery of the parcel. The data are arranged at the illustrated spaced-apart areas on the label 60.

In accordance with this invention, the controller 36 is automatically configured for detecting the plurality of data and the spaced-apart areas 62, 64, 66, 70, 74 at which the plurality of data is arranged over the field of view, and for processing the return light captured by the imager 24 from the plurality of data only when the plurality of data is of a predetermined type and is at predetermined locations or areas on the label 60, in response to the single actuation of the trigger 34. The controller 36 is configured for transmitting the processed return light captured by the imager 24 from the plurality of data away from the controller 36 to, for example, the local memory 14 or a remote host, only after all the data is detected to be of the predetermined type and located at the predetermined locations.

More particularly, the controller 36 is configured for locating the symbol area 66 or 70, the receipt area 74, and the address area 62 or 64 on the label 60, and for detecting whether the symbol 68 is located in the symbol area 66 and has a predetermined symbology, for example, Code 128, whether the symbol 72 is located in the symbol area 70 and has a different predetermined symbology, whether the receipt acknowledgment 76 is located in the receipt area 74, and whether the address of the addressor and/or the addressee is located in the address area 62 or 64. Thereupon, the controller 36 is configured for decoding the Code 128 symbol 68 if the Code 128 symbol 68 is located in the symbol area 66, for decoding the different symbol 72 if the symbol 72 is located in the symbol area 70, for processing the receipt acknowledgment 76 if the receipt acknowledgment 76 is located in the receipt area 74, and for processing the address of the addressor and/or the addressee if the address is located in the address area 62 or 64.

In the preferred embodiment, the controller 36 is configured for processing the return light captured by the imager 24 from the plurality of data in a predetermined order. In other words, one of the data is always read first, followed by another of the data, and so on. The trigger 34 is manually operated to capture the return light from all the data on the label 60 in a single manual action or stroke. Thus, an operator of the imaging reader 30 of this invention does not successively aim the reader 30 at each piece of data in its turn, nor manually pull the trigger 34 to initiate reading of each piece of data. The operator need not be trained as to which data type to have the reader read first, and in what order. A single trigger pull initiates the reading of all the data on a single label 60. The training and operational burden imposed on the operator is reduced and the productivity of the imaging reader is enhanced.

Configuration of the controller 36 with location parameters of the various areas and/or symbology parameters and/or signature/seal capture parameters and/or optical character recognition parameters can be performed by having the reader 30 read a self-configuring, special configuration symbol, or by a command from a remote host, or manually. For example, the location parameters of a rectangular field of view can be defined by x, y coordinates of the upper left corner and of the lower right corner. The symbology parameters can be to accept only one or more or all symbologies. The signature/seal capture parameters can be to accept images in a certain image format, e.g., jpeg or bitmap.

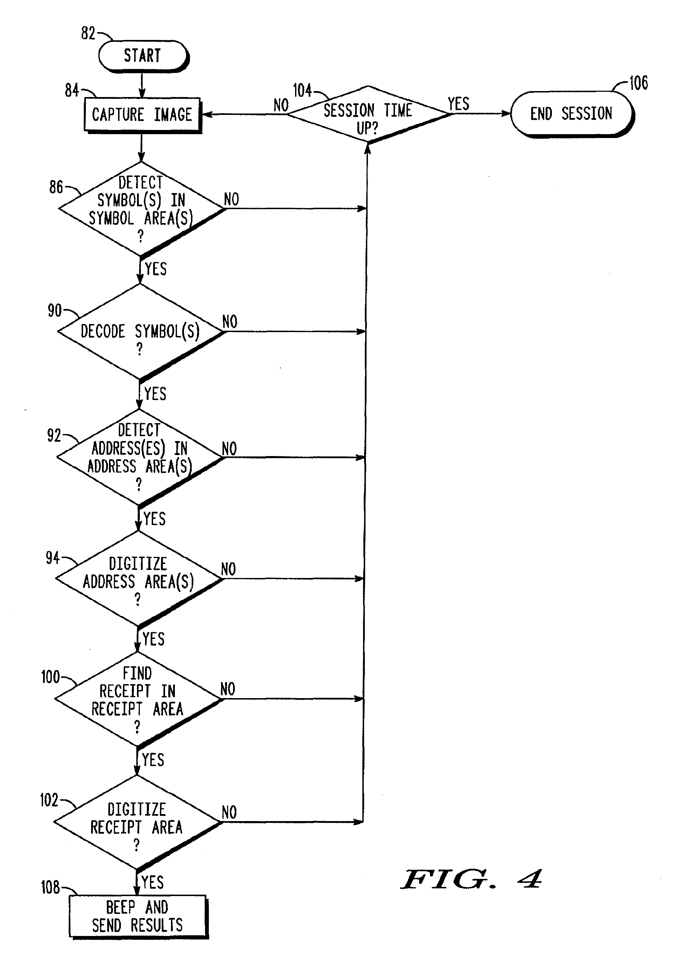

FIG. 4 is a flow chart depicting the method of this invention. Starting at start step 82, the controller 36 is operative at step 84 for capturing an image of all the target data on the label 60. At step 86, the controller 36 is operative for detecting one or more of the symbol areas 66, 70 on the label 60 and whether one or more of the symbols 68, 72 are in these detected areas 66, 70 and whether each symbol 68, 72 has a specific symbology, e.g., Code 128, or different specific symbologies, as shown in FIG. 3. If so, then the controller 36 is operative for decoding each symbol 68, 72 at step 90. Once each symbol 68, 72 has been decoded, the controller 36 detects at step 92 one or more of the address areas 62, 64 on the label 60 and whether one or more of the addresses are in these detected address areas 62, 64. If so, then the controller 36 is operative for digitizing and processing each address area 62, 64 at step 94. Then, the controller 36 finds the receipt acknowledgment area 74, and checks whether the receipt 76 is in the receipt acknowledgment area 74 at step 100, and digitizes the receipt acknowledgment area 74 at step 102. Once all the data has been captured, then the controller 36 transmits all the decoded and processed data away from the controller 36, and a beep or other indicator is generated at step 108.

If the controller 36 does not detect each symbol 68, 72 in the designated symbol area 66, 70, or an address in the designated address area 62, 64, or a receipt acknowledgment 76 in the designated receipt acknowledgment area 74, then the controller 36 checks at step 104 whether the image capture session time has elapsed. If not, then the controller 36 attempts to capture the image again at step 84. If the time has elapsed, then the controller 36 ends the image capture session at step 106.

It will be understood that each of the elements described above, or two or more together, also may find a useful application in other types of constructions differing from the types described above. For example, this invention is not to be limited solely to detecting Code 128 symbols as one of the above-described specific symbologies, or solely to the field of parcel delivery. Also, this invention is not to be limited solely to imaging readers whose only function is to image bar code symbols, receipt acknowledgments and alphanumeric address text, but could equally well apply to other types of data, as well as to mobile computers or terminals having an imager as one of its subsystems.

While the invention has been illustrated and described as an imaging reader for, and a method of, processing a plurality of data on a single target per single actuation of an actuator, it is not intended to be limited to the details shown, since various modifications and structural changes may be made without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention and, therefore, such adaptations should and are intended to be comprehended within the meaning and range of equivalence of the following claims.

What is claimed as new and desired to be protected by Letters Patent is set forth in the appended claims.

## Claims

1. An imaging reader for processing a plurality of data arranged at spaced-apart locations on a target, comprising:
a solid-state imager having an array of image sensors for capturing return light from the plurality of data on the target over a field of view;
an actuator for actuating the imager to capture the return light from the plurality of data on the target in a single actuation; and
a controller operatively connected to the actuator and the imager, and automatically configured for detecting the plurality of data and the spaced-apart locations at which the plurality of data is arranged over the field of view, and for processing the return light captured by the imager from the plurality of data only when the plurality of data is of a predetermined type and is at predetermined locations on the target, in response to the single actuation.

2. The reader of claim 1, wherein the controller is configured for detecting whether the plurality of data is at least one of a symbol, alphanumeric text, a receipt acknowledgment, and a picture.

3. The reader of claim 1, wherein the controller is configured for detecting whether the plurality of data includes a plurality of symbols having a common symbology.

4. The reader of claim 1, wherein the controller is configured for detecting whether the plurality of data includes a plurality of symbols having different symbologies.

5. The reader of claim 1, wherein the controller is configured for transmitting the processed return light captured by the imager from the plurality of data away from the controller only after all the data is detected to be of the predetermined type and located at the predetermined locations.

6. The reader of claim 1, wherein the plurality of data includes a symbol having a symbology, a receipt acknowledgment, and an alphanumeric address; and wherein the controller is configured for locating a symbol area, a receipt area, and an address area on the target, and for detecting whether the symbol is located in the symbol area and has a predetermined symbology, whether the receipt acknowledgment is located in the receipt area, and whether the address is located in the address area; and wherein the controller is configured for decoding the symbol if the symbol is located in the symbol area, for processing the receipt acknowledgment if the receipt acknowledgment is located in the receipt area, and for processing the address if the address is located in the address area.

7. The reader of claim 6, wherein the controller is configured for transmitting the processed return light captured by the imager from the symbol, receipt acknowledgment and the address away from the controller only after the symbol has been decoded and after the receipt acknowledgment and the address have been processed.

8. The reader of claim 1, wherein the controller is configured for processing the return light captured by the imager from the plurality of data in a predetermined order.

9. The reader of claim 1, wherein the actuator is manually operated to capture the return light from the plurality of data on the target in a single manual action.

10. An imaging reader for processing a plurality of data arranged at spaced-apart locations on a target, comprising:
means for capturing return light from the plurality of data on the target over a field of view;
means for actuating the capturing means to capture the return light from the plurality of data on the target in a single actuation; and
means for detecting the plurality of data and the spaced-apart locations at which the plurality of data is arranged over the field of view, and for processing the return light captured from the plurality of data only when the plurality of data is of a predetermined type and is at predetermined locations on the target, in response to the single actuation.

11. An imaging method of processing a plurality of data arranged at spaced-apart locations on a target, comprising the steps of:
capturing return light from the plurality of data on the target over a field of view of an imager;
actuating the imager to capture the return light from the plurality of data on the target in a single actuation; and
detecting the plurality of data and the spaced-apart locations at which the plurality of data is arranged over the field of view, and processing the return light captured by the imager from the plurality of data only when the plurality of data is of a predetermined type and is at predetermined locations on the target, in response to the single actuation.

12. The method of claim 11, wherein the detecting step is performed by detecting whether the plurality of data is at least one of a symbol, alphanumeric text, a receipt acknowledgment, and a picture.

13. The method of claim 11, wherein the detecting step is performed by detecting whether the plurality of data includes a plurality of symbols having a common symbology.

14. The method of claim 11, wherein the detecting step is performed by detecting whether the plurality of data includes a plurality of symbols having different symbologies.

15. The method of claim 11, and a step of transmitting the processed return light captured by the imager from the plurality of data only after all the data is detected to be of the predetermined type and located at the predetermined locations.

16. The method of claim 11, and a step of configuring the plurality of data as a symbol having a symbology, a receipt acknowledgment, and an alphanumeric address; and a step of locating a symbol area, a receipt area, and an address area on the target; and wherein the detecting step is performed by detecting whether the symbol is located in the symbol area and has a predetermined symbology, whether the receipt acknowledgment is located in the receipt area, and whether the address is located in the address area; and wherein the processing step is performed by decoding the symbol if the symbol is located in the symbol area, processing the receipt acknowledgment if the receipt acknowledgment is located in the receipt area, and processing the address if the address is located in the address area.

17. The method of claim 16, and a step of transmitting the processed return light captured by the imager from the symbol, receipt acknowledgment and the address only after the symbol has been decoded and after the receipt acknowledgment and the address have been processed.

18. The method of claim 11, wherein the processing step is performed by processing the return light captured by the imager from the plurality of data in a predetermined order.

19. The method of claim 11, wherein the actuating step is performed manually in a single manual action.
